# FASCICULE DE BREVET EUROPEEN

(11) **EP 4 110 640 B1**
(45) Date de publication et mention de la délivrance du brevet: **28.05.2025**
(21) Numéro de dépôt: 21706313.0
(22) Date de dépôt: 24.02.2021
(51) Int. Cl.: B60K 35/23, B60K 35/81, G02B 5/20, G02B 7/00, G09G 3/00, G09G 5/10, G02B 27/01

(54) **DISPOSITIF D'AFFICHAGE TÊTE-HAUTE**
HEAD-UP-ANZEIGEVORRICHTUNG
HEAD-UP DISPLAY DEVICE

(30) Priorité: 26.02.2020 FR 2001873
(43) Date de publication de la demande: 04.01.2023
(73) Titulaire: Valeo Comfort and Driving Assistance, 94000 Créteil (FR)
(72) Inventeur: BEN NACHOUANE, Ayoub, 94046 Créteil CEDEX Créteil CEDEX (FR)
(74) Mandataire: Delplanque, Arnaud
(86) Numéro de dépôt international: PCT/EP2021/054531
(87) Numéro de publication internationale: WO 2021/170636

(56) Documents cités:
- EP-A1- 2 843 652
- EP-A1- 2 843 652
- EP-A1- 3 570 089
- EP-A1- 3 570 089
- JP-A- 2017 003 684
- JP-A- 2017 003 684
- US-A1- 2014 132 852
- US-A1- 2014 132 852
- US-A1- 2016 363 765
- US-A1- 2016 363 765

## Description

### DOMAINE TECHNIQUE DE L'INVENTION

La présente invention concerne de manière générale le domaine technique de l'affichage tête haute.

Elle concerne plus particulièrement un dispositif d'affichage tête-haute, par exemple pour véhicule automobile.

### ARRIERE-PLAN TECHNOLOGIQUE

On connaît des dispositifs d'affichage tête-haute, plus communément appelés HUD (de l'anglais « head-up display ») comprenant un dispositif de génération d'images et un système optique, généralement agencés à l'intérieur d'un boîtier. Le dispositif de génération d'images est conçu pour générer un faisceau lumineux. Le système optique est quant à lui configuré pour projeter le faisceau lumineux en direction d'une lame partiellement transparente à travers une fenêtre formée dans le boîtier.

Après réflexion partielle sur la lame partiellement transparente, le faisceau lumineux atteint les yeux du conducteur de manière à former une image virtuelle vue par le conducteur au-delà de la lame partiellement transparente, c'est-à-dire, dans les applications usuelles, à l'avant du véhicule.

L'intensité du faisceau lumineux généré par le dispositif de génération d'images est habituellement réglée en fonction de la luminosité ambiante : plus la luminosité ambiante est élevée, plus l'intensité du faisceau lumineux doit être élevée elle aussi.

Cependant, dans certaines configurations d'éclairement solaire (en particulier pour certains positionnements relatifs du soleil, de la fenêtre du boîtier et du système optique), le flux solaire effectue le trajet inverse du faisceau lumineux formant l'image virtuelle. Le flux solaire est alors concentré sur le dispositif de génération d'images, ce qui provoque son échauffement. Un tel échauffement est préjudiciable au fonctionnement du dispositif de génération d'images et peut aller jusqu'à sa détérioration.

Il existe des stratégies de protection du dispositif d'affichage tête-haute basées sur des mesures de température à l'intérieur du dispositif d'affichage tête-haute. Par exemple lorsque la température à l'intérieur du dispositif d'affichage tête-haute dépasse une valeur seuil, le dispositif de génération d'images du dispositif d'affichage tête-haute peut se mettre à l'arrêt ou une pièce mobile peut venir bloquer le flux solaire.

Un des inconvénients de cette stratégie est que pour déclencher l'arrêt du dispositif d'affichage tête-haute, une montée en température du dispositif d'affichage tête-haute doit nécessairement avoir lieu. Il peut être difficile d'arrêter cette montée en température au moment le plus opportun. En effet, l'arrêt du dispositif d'affichage tête-haute ne signifie pas nécessairement une réduction immédiate de la température.

### PRESENTATION DE L'INVENTION

Dans ce contexte, la présente invention propose dispositif d'affichage tête-haute pour véhicule comprenant un dispositif de génération d'images conçu pour générer un faisceau lumineux ; un système optique configuré pour projeter ledit faisceau lumineux en direction d'une lame partiellement transparente et comprenant un premier miroir agencé pour réfléchir ledit faisceau lumineux ; un capteur optique conçu pour déterminer un flux lumineux ; et un module de protection apte à commander une réduction d'intensité dudit faisceau lumineux sur la base dudit flux lumineux; un champ de vision dudit capteur optique est orienté vers une surface de réflexion dudit premier miroir et le capteur optique comprend une matrice de plusieurs cellules photoélectriques.

Ainsi, grâce à l'invention, le capteur optique permet de déterminer le flux solaire qui pénètre dans le dispositif d'affichage tête-haute et qui pourrait endommager le dispositif de génération d'images. En effet, le flux solaire réfléchit par le premier miroir est responsable de l'échauffement du dispositif de génération d'images.

Par conséquent, en connaissant les propriétés intrinsèques du dispositif de génération d'images, ou bien par calibration, il est possible d'anticiper l'échauffement du dispositif de génération d'images soumis au flux solaire. Il est donc possible de proposer une stratégie de protection thermique, par exemple ici en diminuant l'intensité de l'image virtuelle, sûre et temporellement pertinente, c'est-à-dire qui peut anticiper la montée en température. En d'autres termes, cette stratégie permet de déterminer un effet, ici le flux solaire pénétrant dans le dispositif d'affichage tête-haute, de manière à prévenir la cause qui est l'échauffement du dispositif de génération d'images.

D'autres caractéristiques non limitatives et avantageuses du dispositif d'affichage tête-haute conforme à l'invention, prises individuellement ou selon toutes les combinaisons techniquement possibles, sont les suivantes :
- ledit capteur optique comprend au moins une cellule photoélectrique et ledit champ de vision est orientée vers le centre de la surface de réflexion dudit faisceau lumineux sur ledit premier miroir ;
- ledit capteur optique est disposé à proximité dudit dispositif de génération d'images de telle sorte que l'angle formé entre un trajet dudit faisceau lumineux entre ledit dispositif de génération d'images et ledit premier miroir et un axe principal d'observation dudit capteur optique soit inférieur à 45 degrés ;
- ledit premier miroir comprend un premier filtre optique disposé sur sa surface réfléchissante et présentant un coefficient de réflexion inférieur à 5% pour un rayonnement compris dans une plage donnée de l'infrarouge ;
- ledit premier miroir comprend un second filtre optique disposé sur sa surface réfléchissante et présentant un coefficient de réflexion inférieur à 5% pour une polarisation rectiligne donnée d'un faisceau lumineux ;
- ledit capteur optique est apte à déterminer un flux lumineux issu d'un rayonnement dans le domaine visible ;
- ledit système optique comprend un second miroir qui est concave, sur lequel ledit faisceau lumineux se réfléchit et qui est situé entre ledit premier miroir et ladite lame partiellement transparente par rapport au trajet dudit faisceau lumineux ;
- ledit second miroir est mobile est peut être déplacé vers une position de protection où le trajet du faisceau lumineux entre le système optique et la lame partiellement transparente est interrompu ;
- ledit module de protection commande ladite réduction d'intensité en outre sur la base d'au moins un des paramètres suivant : une température ambiante dudit dispositif de génération d'images ; une luminosité extérieure ; et une température de jonction d'un élément semi-conducteur.

L'invention propose également un procédé de protection d'un dispositif d'affichage tête-haute comprenant : un dispositif de génération d'images conçu pour générer un faisceau lumineux ; un système optique configuré pour projeter ledit faisceau lumineux en direction d'une lame partiellement transparente et comprenant un premier miroir agencé pour réfléchir ledit faisceau lumineux ; un capteur optique comprenant une matrice de plusieurs cellules photoélectriques et possédant un champ de vision orienté vers la surface de réflexion dudit faisceau lumineux sur ledit premier miroir; et un module de protection ; ledit procédé comprenant les étapes suivantes :
- la détermination, par ledit capteur optique, d'un flux lumineux ; et
- la réduction, par ledit module de protection, de l'intensité dudit faisceau lumineux sur la base dudit flux lumineux déterminée par ledit capteur optique.

D'autres caractéristiques non limitatives et avantageuses du procédé de protection conforme à l'invention, prises individuellement ou selon toutes les combinaisons techniquement possibles, sont les suivantes :
- le procédé comprend au moins l'une des étapes suivantes : la détermination, par un capteur de température, d'une température ambiante dudit dispositif d'affichage tête-haute ; la détermination, par un circuit de mesure, d'une température de jonction d'un élément semi-conducteur ; et la détermination, par un capteur de luminosité extérieur, d'une luminosité extérieure ;et comprenant une étape de réduction, par ledit module de protection, de l'intensité dudit faisceau lumineux sur la base d'au moins l'un des paramètres suivants : ladite température ambiante, ladite température de jonction et ladite luminosité extérieure ;
- le procédé comprend une étape de déplacement, commandé par ledit module de protection sur la base dudit flux lumineux, d'un second miroir mobile vers une position de protection où le trajet du faisceau lumineux entre le système optique et la lame partiellement transparente est interrompu ;
- ledit capteur optique détermine un flux lumineux issu d'un rayonnement dans le domaine visible.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] représente schématiquement en coupe un dispositif d'affichage tête-haute selon l'invention ;
[Fig. 2] représente une courbe de réduction basée sur une mesure de température ; et
[Fig. 3] représente un schéma bloc d'une séquence d'étapes permettant la mise en œuvre d'un procédé de protection thermique.

Bien entendu, diverses autres modifications peuvent être apportées à l'invention dans le cadre des revendications annexées.

Ici, un dispositif d'affichage tête-haute 1 est décrit dans le cas ou il est utilisé au sein d'un véhicule automobile.

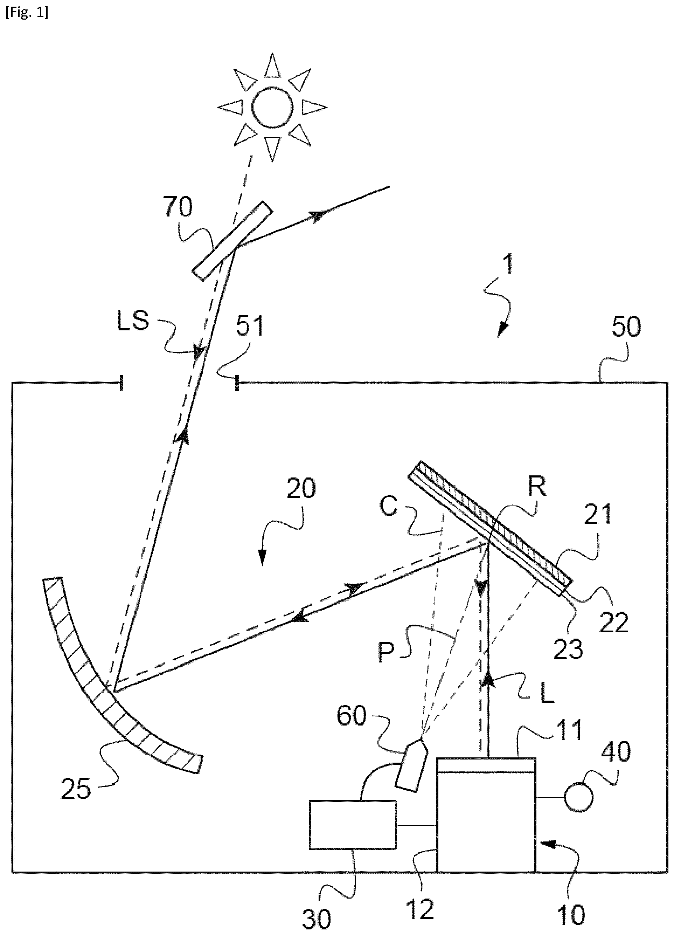

Comme le montre la figure 1, le dispositif d'affichage tête-haute 1 comprend un dispositif de génération d'images 10, un système optique 20, un capteur optique 60 et un module de protection 30.

Le dispositif d'affichage tête-haute 1 est piloté par un calculateur. Le calculateur est programmé pour piloter et/ou connecter les différents éléments du dispositif d'affichage tête-haute 1. Ici, le calculateur est le calculateur du véhicule. En variante, le dispositif d'affichage tête-haute pourrait comprendre un calculateur dédié.

Le dispositif de génération d'images 10 est conçu pour générer un faisceau lumineux appelé faisceau lumineux modulé L. Pour cela, le dispositif de génération d'images 10 comprend une source de lumière 12 et un modulateur 11.

Le modulateur 11 est constitué d'une matrice d'éléments dont la transmittance varie dans le temps. Le modulateur 11 reçoit un faisceau lumineux source généré par la source de lumière 12 et transmet le faisceau lumineux modulé L. Ici, la source de lumière 12 est polychromatique pour former des images en couleurs. Grâce à sa matrice d'éléments, le modulateur 11 module spatialement le faisceau lumineux source de manière à former le faisceau lumineux modulé L.

Ici, le modulateur 11 est un écran à cristaux liquides de type TFT (de l'anglais « thin film transistor »), c'est-à-dire une matrice de cellules à cristaux liquides commandées chacune par un transistor en film mince (d'où le nom de l'écran dit TFT). Pour chaque élément de la matrice, trois cellules, chacune associée à un filtre coloré, par exemple un pour le bleu, un pour le vert et un pour le rouge, permettent de contrôler la transmittance, en orientant les cristaux liquides, de façon stable et avec un faible temps de réponse.

En variante, pour former le faisceau lumineux modulé L, une face arrière d'un diffuseur est balayée par un faisceau laser généré par un ensemble de diodes laser, le balayage étant par exemple réalisé par un miroir mobile. Ensuite, une face avant du diffuseur génère le faisceau lumineux modulé.

Le système optique 20 est agencé pour projeter le faisceau lumineux modulé L en direction d'une lame partiellement transparente 70 selon un trajet déterminé. Le faisceau lumineux modulé L est réfléchi par la lame partiellement transparente 70 vers une zone d'observation où se situent les yeux du conducteur. Le trajet du faisceau lumineux modulé L entre le dispositif de génération d'images 10 et la lame partiellement transparente 70 défini un chemin optique.

La lame partiellement transparente 70 est orientée de façon à réfléchir une partie du faisceau lumineux modulé L en direction d'une zone d'observation dans laquelle se trouvent les yeux du conducteur, de manière à former une image virtuelle. La lame partiellement transparente 70 peut être une partie d'un pare-brise du véhicule ou un combineur, c'est-à-dire une lame partiellement transparente dédiée à l'afficheur tête-haute. Un tel combineur serait placé entre le pare-brise et les yeux du conducteur.

L'image virtuelle contient des indications ou informations destinées au conducteur du véhicule, par exemple sous forme de symboles réglementaires et/ou d'un indicateur de vitesse et/ou d'un indicateur de régime-moteur et/ou d'un indicateur de défaut et/ou d'une instruction de navigation.

Comme le montre la figure 1, le système optique 20 comprend ici un premier miroir 21 (parfois dénommé "miroir de repliement") qui est un miroir plan. Le système optique 20 comprend aussi un second miroir 25 qui est un miroir concave. Le second miroir 25 concave permet par exemple l'agrandissement de petites images générées par le dispositif de génération d'images 10 pour former des images virtuelles de taille adéquate. Ici, le second miroir 25 est mobile, par exemple en rotation, de manière à ajuster la position de l'image virtuelle à la zone d'observation, qui dépend de la taille du conducteur. Le premier miroir 21 oriente le faisceau lumineux modulé L produit par le dispositif de génération d'images 10 vers le second miroir 25.

De manière classique, le dispositif d'affichage tête-haute 1 est ici compris dans un boîtier 50 de protection ou un carter. Une ouverture 51 est réalisée dans le boîtier 50 pour permettre au faisceau lumineux modulé L de se propager vers la lame partiellement transparente 70. L'ouverture 51 peut être couverte par un matériau transparent tel qu'une lame de verre.

Dans la suite, l'adjectif « intérieur » fait référence à l'intérieur du dispositif d'affichage tête-haute 1 donc ici à l'intérieur du boîtier 50. L'adjectif « extérieur » fait référence à l'extérieur du dispositif d'affichage tête-haute 1 donc ici à l'extérieur du boîtier 50. L'adjectif « extérieur » fait par exemple référence à l'habitacle du véhicule.

Comme le montre la figure 1, dans certaines configurations d'éclairement solaire (en particulier pour certains positionnements relatifs du soleil, de la fenêtre du boîtier et du système optique), un faisceau lumineux solaire LS peut pénétrer à l'intérieur du dispositif d'affichage tête-haute 1, ici par l'ouverture 51. Cela arrive notamment lorsque le soleil, la lame partiellement transparente 70 et le second miroir 25 sont sensiblement alignés, comme cela est représenté sur la figure 1.

La figure 1 représente un exemple particulier de propagation du faisceau lumineux solaire LS. Dans cet exemple le faisceau lumineux solaire LS parcourt le chemin optique en sens inverse. Ce cas de figure correspond à la situation la plus dommageable pour le dispositif d'affichage tête-haute 1 puisque le second miroir 25 focalise, après réflexion sur le premier miroir 21, le faisceau lumineux solaire LS au centre du modulateur 11. Dans d'autres cas, le faisceau lumineux solaire LS peut illuminer d'autres zones du modulateur 11 mais est moins focalisé.

Le modulateur 11 est relativement absorbant. Ainsi, lorsque le faisceau lumineux solaire LS parvient jusqu'au modulateur 11, le faisceau lumineux solaire LS provoque rapidement l'échauffement du modulateur 11 et plus généralement du dispositif de génération d'images 10. Un tel échauffement est préjudiciable au fonctionnement du dispositif de génération d'images 10 et peut aller jusqu'à sa détérioration. Par exemple ici, à partir d'une certaine température, les cristaux liquides du modulateur 11 peuvent perdre leur polarisation.

Pour limiter l'échauffement du dispositif de génération d'images 10, le premier miroir 21 comprend ici un premier filtre optique 22 disposé sur sa surface réfléchissante et présentant un coefficient de réflexion inférieur à 5% pour un rayonnement compris dans une plage donnée de l'infrarouge. Le faisceau lumineux solaire LS est donc filtré lors de sa réflexion sur le premier miroir 21. Autrement dit, un rayonnement compris dans une plage donnée de l'infrarouge, ici cette plage donnée correspond aux longueurs d'onde inférieures à 700 nm, ne se réfléchit que très faiblement, à moins de 5%, sur le premier miroir 21.

Grâce au premier filtre optique 22, la partie infrarouge du faisceau lumineux solaire LS n'atteint pas le dispositif de génération d'images 20. Ce premier filtre optique 22 ne perturbe pas le fonctionnement du dispositif d'affichage tête-haute 1 car celui-ci fonctionne dans le domaine visible.

Pour limiter l'échauffement du dispositif de génération d'images 10, le premier miroir 21 comprend ici un second filtre optique 23 disposé sur sa surface réfléchissante et présentant un coefficient de réflexion inférieur à 5% pour une polarisation rectiligne donnée d'un faisceau lumineux. En effet, le modulateur 11 polarise le faisceau lumineux modulé L de façon rectiligne selon une direction donnée. Le second filtre optique 23 est disposé de manière à réfléchir quasiment totalement un faisceau lumineux selon cette direction donnée mais présente un coefficient de réflexion inférieur à 5% pour une polarisation rectiligne perpendiculaire à cette direction donnée. Ainsi seulement une partie du le faisceau lumineux solaire LS, celle qui a la même polarité que le faisceau lumineux modulé L, est réfléchie vers le dispositif de génération d'images 20, ce qui limite son échauffement sans perturber son fonctionnement.

En variante, on pourrait prévoir que le premier filtre optique et/ou le second filtre optique soient disposés ailleurs, par exemple à la surface du second miroir ou à la surface du modulateur. En variante, on pourrait prévoir que le premier filtre optique et le second filtre optique soit qu'un seul et même filtre optique.

Comme le montre la figure 1, le dispositif d'affichage tête-haute 1 comprend aussi un module de protection 30 apte à commander une réduction d'intensité du faisceau lumineux modulé L. Le module de protection 30 peut par exemple commander une réduction de l'intensité du faisceau lumineux source émis par la source de lumière 12, jusqu'à son arrêt total si nécessaire. Pour cela, le module de protection 30 peut par exemple commander une réduction du courant électrique fourni à la source de lumière 12. Les actions effectuées par le module de protection 30 sont rendues possibles grâce à un calculateur interne au module de protection 30 ou par l'intermédiaire du calculateur du dispositif d'affichage tête-haute.

Pour déterminer l'amplitude de la réduction d'intensité, le module de protection 30 peut par exemple être connecté à un capteur de température 40 situé à proximité du modulateur 11 ou sur la carte électronique de la source de lumière 12. Le capteur de température 40 est conçu pour mesurer la température ambiante TA du dispositif de génération d'images 10. Le capteur de température 40 est par exemple une thermistance à coefficient de température négatif.

Ici, le module de protection 30 est conçu pour commander la réduction d'intensité du faisceau lumineux modulé L lorsque la température ambiante TA est supérieure à un seuil ambiant. Le seuil ambiant est par exemple compris entre 60°C et 100°C, le seuil ambiant est de préférence compris entre 70°C et 100°C.

Cette mesure de température ambiante TA permet de mettre en place une stratégie de réduction dite de « derating », caractérisée par une réduction des performances du dispositif de génération d'images 10. Cette stratégie consiste à définir l'intensité maximum du faisceau lumineux modulé L généré par le dispositif de génération d'images 10, c'est-à-dire la luminance maximale de l'image virtuelle, en fonction de la température ambiante TA.

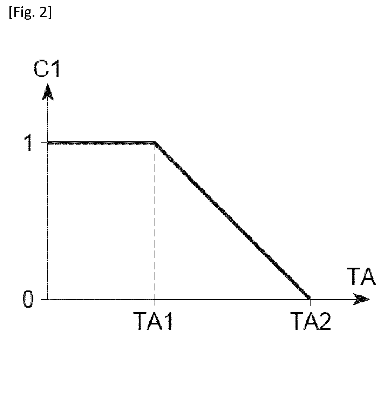

Comme le montre la figure 2, l'amplitude de la réduction d'intensité, représenté par un premier coefficient C1 de réduction de l'intensité du faisceau modulé L, peut être donnée par une courbe de réduction dite « courbe de derating » définie en trois intervalles :
i) un intervalle où la température ambiante TA est inférieure ou égale à une valeur seuil TA1, le dispositif de génération d'images 10 peut alors fonctionner au maximum de ses capacités, le premier coefficient C1 est égal à 1 ;
ii) un intervalle où la température ambiante TA est supérieure à la valeur seuil TA1 et inférieure à une valeur maximum TA2, le module de protection 30 peut diminuer l'intensité du faisceau lumineux modulé L, l'amplitude de la réduction est obtenue par une projection sur une courbe linéaire décroissante, le premier coefficient C1 est compris entre 0 et 1 ;
iii) un intervalle où la température ambiante TA est supérieure à la valeur maximum TA2, le module de protection 30 peut commander l'arrêt du dispositif de génération d'images 10, le premier coefficient est égal à 0.

Ici, le dispositif d'affichage tête-haute 1 comprend aussi un circuit de mesure conçu pour mesurer une température interne au niveau du dispositif de génération d'images 10, par exemple au niveau de la source de lumière 12.

Ainsi, lorsque le dispositif de génération d'images 10 comprend un élément semi-conducteur, par exemple un élément semi-conducteur de l'écran TFT ou une diode électroluminescente de la source de lumière 12, le circuit de mesure peut être conçu pour mesurer une température de jonction TJ de l'élément semi-conducteur. Si la température limite de l'élément semi-conducteur est atteinte, le module de protection 30 commande l'arrêt du dispositif de génération d'images 10.

Le module de protection 30 peut alors commander une réduction d'intensité du faisceau lumineux L lorsque la température de jonction TJ est supérieure à un seuil de jonction. Le seuil de jonction est de préférence compris entre 95°C et 110°C, ce qui correspond classiquement aux limites thermiques d'un écran TFT. Le seuil de jonction peut par exemple être égal à 110°C.

On peut alors prévoir de mettre en place une deuxième stratégie de réduction associée au fonctionnement du ou des éléments semi-conducteurs et basée sur la température de jonction TJ. Cela signifie que le module de protection 30 peut diminuer l'intensité du faisceau lumineux modulé L pour réguler la température de jonction. Comme précédemment, l'amplitude de la réduction, représentée par un premier coefficient C2, d'intensité peut être donnée par une deuxième courbe de réduction définie en intervalles.

L'intensité du faisceau lumineux modulé L à un instant donnée dépend aussi de facteurs extérieurs comme une luminosité extérieure LEX. En effet, il est important de considérer la luminosité extérieure LEX autour du conducteur pour adapter la luminance de l'image virtuelle, par exemple pour s'adapter au passage dans un tunnel, à la sortie d'un tunnel ou à une situation d'éblouissement. Ainsi, on peut mettre en place une stratégie de d'atténuation dite de « dimming » pour adapter la luminance de l'image virtuelle en fonction de la luminosité extérieure LEX. Cette stratégie d'atténuation peut amener le dispositif de génération d'images 10 à augmenter ou à diminuer l'intensité du faisceau lumineux modulé L d'un troisième coefficient C3. Pour mettre en place la stratégie d'atténuation, module de protection 30 peut par exemple être connecté à un capteur de luminosité externe situé dans l'habitacle du véhicule.

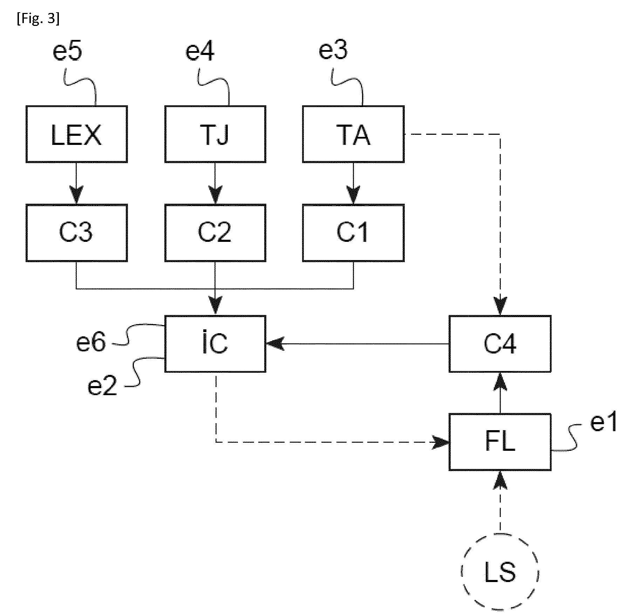

Ainsi, lors d'un procédé de protection thermique représenté en figure 3, l'intensité corrigée IC du faisceau lumineux modulé à un instant donné peut correspondre à une intensité de consigne, par exemple précédemment choisie par le conducteur pour obtenir une luminance voulue de l'image virtuelle, pondérée par le premier coefficient C1 et/ou le deuxième coefficient C2 et/ou le troisième coefficient C3. Cela signifie que la luminance de l'image virtuelle à un instant donné peut correspondre à une luminance d'origine pondérée par le premier coefficient C1 et/ou le deuxième coefficient C2 et/ou le troisième coefficient C3, appelée luminance corrigée.

Ainsi, le procédé de protection peut comprendre :
- une étape e3 dans laquelle la température ambiante TA est déterminée par le capteur de température 40 et dans laquelle le module de protection 30 détermine un premier coefficient C1 de réduction de l'intensité du faisceau lumineux modulé L sur la base de la température ambiante TA ;
- une étape e4 dans laquelle la température de jonction TJ est déterminée par le circuit de mesure et dans laquelle le module de protection 30 détermine un deuxième coefficient C2 de réduction de l'intensité du faisceau lumineux modulé L sur la base de la température de jonction TJ ;
- une étape e5 dans laquelle la luminosité extérieure LEX est déterminée par le capteur de luminosité extérieur et dans laquelle le module de protection 30 détermine un troisième coefficient C3 d'adaptation de l'intensité du faisceau lumineux modulé L ;
- une étape e6 dans laquelle l'intensité corrigée IC est déterminée par le module de protection 30 sur la base du premier coefficient C1 et/ou du deuxième coefficient C2 et/ou du troisième coefficient C3.

Le module de protection 30 peut donc se baser sur les paramètres suivant pour commander une réduction d'intensité du faisceau lumineux modulé L :
- la température ambiante TA ;
- la luminosité extérieure LEX ;
- la température de jonction TJ.

Bien que pouvant être suffisantes pour protéger le dispositif d'affichage tête-haute 1 contre des contraintes thermiques internes dû à son fonctionnement, les stratégies basées sur des mesures de températures, telles que les stratégies de réduction, présentent des limites pour protéger le dispositif d'affichage tête-haute 1 de la contrainte thermique externe qu'est le rayonnement solaire.

En effet, le faisceau lumineux solaire LS est une contrainte thermique externe qui peut être trois à quatre fois supérieure à aux contraintes thermiques internes et qui peut générer des échauffements locaux rapides, il convient donc d'anticiper ces échauffements. Anticiper ces échauffements signifie par exemple que le module de protection 30 peut diminuer l'intensité du faisceau lumineux modulé L de façon préventive pour empêcher la détérioration du dispositif de génération d'images 10 et notamment du modulateur 11.

De plus, on peut aussi prévoir que le module de protection 30 puisse commander la fermeture de l'ouverture 51 grâce à une pièce mobile de façon à empêcher le faisceau lumineux solaire LS de pénétrer à l'intérieur du dispositif d'affichage tête-haute 1. On peut aussi prévoir que le second miroir 25, qui ici est mobile, soit déplacé vers une position de protection où le trajet du faisceau lumineux modulé L entre le système optique 10 et la lame partiellement transparente 70 est interrompu, c'est-à-dire vers une position où le faisceau lumineux solaire LS ne peut pas atteindre le dispositif de génération d'images 10.

Dans ce contexte, le dispositif d'affichage tête-haute 1 comprend un capteur optique 60 conçu pour déterminer un flux lumineux FL. Le capteur optique 60 possède un champ de vision C pouvant être défini par un angle solide au travers duquel le capteur optique 60 est sensible à un rayonnement électromagnétique.

Comme le montre la figure 1, le champ de vision C du capteur optique 60 est orienté vers le premier miroir 21. Ainsi, le capteur optique 60 peut déterminer le flux lumineux FL en provenance du premier miroir 21.

Dans le cas où, comme dans la figure 1, un faisceau lumineux solaire LS pénètre dans le dispositif d'affichage tête-haute 1, le flux lumineux FL en provenance du premier miroir 21 est notamment dû au faisceau lumineux solaire LS. Ici, plus spécifiquement, la disposition et l'orientation du capteur optique 60 font que le flux lumineux FL, déterminé par le capteur optique 60, en provenance du premier miroir 21 est principalement dû au faisceau lumineux solaire LS par rapport au faisceau lumineux modulé L. En effet, le flux lumineux FL déterminé par le capteur optique 60 est une fraction du flux lumineux incident sur le dispositif de génération d'images 10.

Sur la base du flux lumineux FL déterminé par le capteur optique 60, des facteurs de correction permettent de déterminer un flux lumineux incident sur le dispositif de génération d'images 10. Ces facteurs de corrections, qui peuvent être déterminés par calibration, dépendent par exemple de la position et de l'orientation du capteur optique 60.

Par exemple, pour une position donnée du capteur, on peut faire varier l'intensité du faisceau lumineux modulé L et construire un premier modèle de corrélation mathématique entre l'intensité du faisceau lumineux modulé L et les valeurs de flux lumineux FL mesurées par le capteur optique 60. On peut ensuite varier l'intensité d'un faisceau lumineux pénétrant dans le dispositif d'affichage tète-haute 1 et construire un deuxième modèle de corrélation mathématique entre l'intensité du faisceau lumineux solaire LS et les valeurs de flux lumineux FL mesurées par le capteur optique 60. Enfin, on peut construire un troisième modèle de corrélation mathématique en faisant varier à la fois l'intensité du faisceau lumineux modulé L et l'intensité d'un faisceau lumineux pénétrant dans le dispositif d'affichage tète-haute 1

Selon une première possibilité de réalisation, le capteur optique 60 peut comprendre une cellule photoélectrique et le champ de vision C est alors orientée vers un point remarquable R qui est le centre de la surface de réflexion du faisceau lumineux modulé L sur le premier miroir 21. Ici, ce point remarquable R correspond également à l'image du centre du modulateur 11 sur le premier miroir 21.

Lorsque le faisceau lumineux solaire LS pénètre dans le dispositif d'affichage tête-haute 1, le faisceau lumineux solaire LS est concentré vers le point remarquable R car il se trouve sur l'axe optique du second miroir 25 concave. Le flux lumineux FL provenant du premier miroir 21, qui est ici principalement dû au faisceau lumineux solaire LS, peut donc être déterminé avec une grande précision en orientant le champ de vision C du capteur optique 60 vers ce point remarquable R.

Selon une deuxième possibilité de réalisation, le capteur optique 60 peut comprendre une matrice de plusieurs cellules photoélectriques et le champ de vision C est alors orientée vers la surface de réflexion du faisceau lumineux modulé L sur le premier miroir 21. Une matrice de cellules photoélectriques permet d'améliorer la précision de la détermination du flux lumineux FL solaire en combinant des mesures en plusieurs points de la surface du premier miroir 21. Une matrice de plusieurs cellules photoélectriques permet de détecter plus facilement des points chauds qui pourraient se former sur le modulateur 11 par focalisation du faisceau lumineux solaire LS. Un point chaud peut être très local, ce qui peut endommager le dispositif de génération d'images 10 sans pour autant élever significativement la température ambiante.

De façon remarquable, orienter le capteur optique 60 vers le premier miroir 21 plutôt que vers le modulateur 11 permet une meilleure détermination du flux lumineux incident sur le dispositif de génération d'images 10. En effet, puisque le modulateur est relativement absorbant, seul une faible partie du faisceau lumineux solaire serait réfléchit vers un capteur optique orienté vers le modulateur, ce qui rendrait la détermination de son intensité peu précise. De plus, ce positionnement du capteur optique 60 facilite son intégration à l'intérieur du dispositif d'affichage tête-haute 1.

Ici, le capteur optique 60 fonctionne principalement dans le domaine visible. En effet, la partie infrarouge du faisceau lumineux solaire LS n'étant quasiment pas réfléchie par le premier miroir 21, seulement la partie visible du faisceau lumineux solaire LS peut provoquer l'échauffement du dispositif de génération d'images 10. Le capteur optique 60 est donc conçu pour mesurer un flux lumineux FL d'un rayonnement dans le domaine visible, par exemple pour une plage de longueurs d'onde allant de 700 nm à 400 nm.

Pour déterminer au mieux le flux lumineux incident sur le dispositif de génération d'images 10, le capteur optique 60 est ici disposé à proximité du dispositif de génération d'images 10, c'est-à-dire qu'il est plus proche du dispositif de génération d'images 10 que du premier miroir 21 ou du second miroir 25.

Par exemple, le capteur optique 60 peut être positionné de telle sorte que l'angle formé entre un trajet du faisceau lumineux modulé L entre le dispositif de génération d'images 10 et le premier miroir 21 et un axe principal d'observation du capteur optique 60 soit inférieur à 45 degrés et de préférence inférieur à 20°. Le trajet du faisceau lumineux modulé L entre le dispositif de génération d'images 10 et le premier miroir 21 correspond à la section du chemin optique allant du dispositif de génération d'images 10 au premier miroir 21.

L'axe principal d'observation P du capteur optique 60 est défini comme la direction selon laquelle le capteur optique 60 est le plus sensible à un rayonnement. Ici, l'axe principal d'observation P correspond à la direction moyenne du champ de vision C du capteur optique 60 passant par le centre du capteur optique 60.

Comme le montre la figure 1, l'axe principal d'observation P est ici orienté vers la surface de réflexion du faisceau lumineux modulé L sur le premier miroir 21. Plus spécifiquement, l'axe principal d'observation P est orienté vers le point remarquable R. Ici, pour que l'angle formé entre le chemin optique et l'axe principal P d'observation du capteur optique 60 soit inférieur à 20 degré, le capteur optique 60 est disposé à proximité du modulateur 11. Il convient néanmoins de ne pas obstruer le chemin optique pour permettre la formation de l'image virtuelle.

Ainsi, grâce au capteur optique 60, le module de protection 30 peut commander la réduction d'intensité du faisceau lumineux modulé L, c'est-à-dire une réduction des performances du dispositif de génération d'images 10, sur la base d'un flux lumineux FL en provenance du premier miroir 21. Si le flux lumineux FL est élevé, par exemple à cause d'un faisceau lumineux solaire LS intense, le module de protection 30 peut commander la réduction d'intensité du faisceau lumineux modulé L.

Comme le montre la figure 3, le procédé de protection du dispositif d'affichage tête-haute 1 comprend :
- une étape e1 de détermination par le capteur optique 60 d'un flux lumineux FL ; et
- une étape e2 de réduction, commandée par le module de protection 30, de l'intensité du faisceau lumineux modulé L sur la base du flux lumineux FL.

Ainsi, grâce au capteur optique 60, le module de protection 30 peut commander une stratégie de protection solaire, constituée des étapes de détermination d'un flux lumineux e1 et de réduction d'intensité e2, afin d'anticiper l'échauffement du dispositif d'affichage tête-haute 1 et notamment du dispositif de génération d'images 10. Ici, la stratégie de protection solaire représente un niveau de sécurité supplémentaire par rapport aux stratégies de de réduction.

L'intensité corrigée IC du faisceau lumineux modulé L dépend donc de la réduction d'intensité commandée sur la base du flux lumineux FL déterminé par le capteur optique 60. Ici, l'intensité corrigée IC correspond à l'intensité de consigne pondérée, entre autres, par un quatrième coefficient C4 déterminée sur la base du flux lumineux FL.

Si l'intensité du faisceau lumineux solaire LS est telle que l'arrêt du dispositif d'affichage tête-haute 1 ne suffise pas à le protéger, le module de protection peut commander la fermeture du boîtier 50 ou le déplacement du second miroir 25. Le déplacement du second miroir 25 peut donc être commandé par le module de protection 30 sur la base du flux lumineux FL.

De plus, on peut prévoir que la stratégie de protection solaire prenne en compte la température ambiante TA. Ainsi, ici, le module de protection 30 utilise un tableau de correspondance indiquant l'intensité maximum du faisceau lumineux modulé L en fonction du flux lumineux FL et pour une température ambiante TA donnée. Cette table de correspondance peut être obtenue par des calibrations en soumettant le dispositif de génération d'images 10 à des flux lumineux déterminés et en mesurant son échauffement. La table de correspondance peut être basée sur les corrélations mathématiques présentées précédemment.

Ici, la table de correspondance fournie au module de protection 30 le quatrième coefficient C4 pour commander la réduction d'intensité du faisceau lumineux L. Le quatrième coefficient C4 dépend du flux lumineux FL. Ici, le quatrième coefficient C4 dépend aussi de la température ambiante TA. L'arrêt du dispositif d'affichage tête-haute 1 peut correspondre à un quatrième coefficient C4 égale à 0.

En variante, on pourrait prévoir que pour déterminer le quatrième coefficient, le module de protection utilise une courbe de protection basée sur le flux lumineux déterminé par le capteur optique et caractérisé par deux valeurs limites de flux lumineux.

En variante on pourrait prévoir que l'échauffement du dispositif de génération d'images soit estimé par simulation sur la base du flux lumineux incident sur le dispositif de génération d'images et de ses propriétés intrinsèque telles que son absorbance et sa capacité thermique.

Comme le montre la figure 3, la stratégie de protection solaire peut aussi prendre en compte l'intensité corrigée IC du faisceau lumineux modulé L. En effet, lorsque le capteur optique 60 détermine le flux lumineux FL provenant du premier miroir 21, on peut estimer la part de ce flux lumineux FL qui est due au faisceau lumineux modulé L puisque l'intensité corrigée IC du faisceau lumineux modulé L à un instant donné est connue. Puisque les positions relatives du dispositif de génération d'images 10, du premier miroir 21 et du capteur optique 60 sont fixes, il est aisé, par calibration, de déterminer le flux lumineux dû au faisceau lumineux modulé L à un instant donné. Par conséquent, on peut déterminer précisément la part du flux lumineux FL qui est due au faisceau lumineux solaire LS.

En d'autres termes, le module de protection 30 peut prendre en compte l'intensité corrigée IC pour commander la réduction d'intensité à l'étape e2, formant par conséquence une boucle de rétroaction.

Ainsi, les différentes stratégies (de réduction, d'atténuation et de protection solaire) interagissent de manière optimale afin de maximiser la luminance de l'image virtuelle tout en protégeant le dispositif d'affichage tête-haute 1 d'un échauffement qui pourrait l'endommager.

## Revendications

1. Dispositif d'affichage tête-haute (1) pour véhicule comprenant :
- un dispositif de génération d'images (10) conçu pour générer un faisceau lumineux (L);
- un système optique (20) configuré pour projeter ledit faisceau lumineux (L) en direction d'une lame partiellement transparente (70) et comprenant un premier miroir (21) agencé pour réfléchir ledit faisceau lumineux (L) ;
- un capteur optique (60) conçu pour déterminer un flux lumineux (FL),un champ de vision (C) dudit capteur optique (60) est orienté vers une surface de réflexion dudit premier miroir (21) ; et
- un module de protection (30) apte à commander une réduction d'intensité dudit faisceau lumineux (L) sur la base dudit flux lumineux (FL) ; **caractérisé en ce que** ledit capteur optique (60) comprend une matrice de plusieurs cellules photoélectriques.

2. Dispositif d'affichage tête-haute (1) selon la revendication 1, dans lequel ledit capteur optique (60) comprend au moins une cellule photoélectrique et ledit champ de vision (C) est orientée vers le centre (R) de la surface de réflexion dudit faisceau lumineux (L) sur ledit premier miroir (21).

3. Dispositif d'affichage tête-haute (1) selon l'une des revendications 1 à 2, dans lequel ledit capteur optique (60) est disposé à proximité dudit dispositif de génération d'images (10) de telle sorte que l'angle formé entre un trajet dudit faisceau lumineux (L) entre ledit dispositif de génération d'images (10) et ledit premier miroir (21) et un axe principal d'observation (P) dudit capteur optique (60) soit inférieur à 45 degrés.

4. Dispositif d'affichage tête-haute (1) selon l'une des revendications 1 à 3, dans lequel ledit premier miroir (21) comprend un premier filtre optique (22) disposé sur sa surface réfléchissante et présentant un coefficient de réflexion inférieur à 5% pour un rayonnement compris dans une plage donnée de l'infrarouge.

5. Dispositif d'affichage tête-haute (1) selon l'une des revendications 1 à 4, dans lequel ledit premier miroir (21) comprend un second filtre optique (23) disposé sur sa surface réfléchissante et présentant un coefficient de réflexion inférieur à 5% pour une polarisation rectiligne donnée d'un faisceau lumineux.

6. Dispositif d'affichage tête-haute (1) selon l'une des revendications 1 à 5, dans lequel ledit capteur optique (60) est apte à déterminer un flux lumineux (FL) issu d'un rayonnement dans le domaine visible.

7. Dispositif d'affichage tête-haute (1) selon l'une des revendications 1 à 6, dans lequel ledit système optique (20) comprend un second miroir (25) qui est concave, sur lequel ledit faisceau lumineux (L) se réfléchit et qui est situé entre ledit premier miroir (21) et ladite lame partiellement transparente (70) par rapport au trajet dudit faisceau lumineux (L).

8. Dispositif d'affichage tête-haute (1) selon la revendication 7, dans lequel ledit second miroir (25) est mobile est peut être déplacé vers une position de protection où le trajet du faisceau lumineux (L) entre le système optique (20) et la lame partiellement transparente (70) est interrompu.

9. Dispositif d'affichage tête-haute (1) selon l'une des revendications 1 à 8, dans ledit module de protection (30) commande ladite réduction d'intensité en outre sur la base d'au moins un des paramètres suivant :
- une température ambiante (TA) dudit dispositif d'affichage tête-haute (1);
- une luminosité extérieure (LEX) ; et
- une température de jonction (TJ) d'un élément semi-conducteur.

10. Procédé de protection d'un dispositif d'affichage tête-haute (1) comprenant :
- un dispositif de génération d'images (10) conçu pour générer un faisceau lumineux (L) ;
- un système optique (20) configuré pour projeter ledit faisceau lumineux (L) en direction d'une lame partiellement transparente (70) et comprenant un premier miroir (21) agencé pour réfléchir ledit faisceau lumineux (L) ;
- un capteur optique (60) comprenant une matrice de plusieurs cellules photoélectriques et possédant un champ de vision (C) orienté vers la surface de réflexion dudit faisceau lumineux (L) sur ledit premier miroir (21) ; et
- un module de protection (30) ;
ledit procédé comprenant les étapes suivantes :
- la détermination (e1) , par ledit capteur optique (60), d'un flux lumineux (FL) ; et
- la réduction (e2), par ledit module de protection (30), de l'intensité dudit faisceau lumineux (L) sur la base dudit flux lumineux (FL) déterminée par ledit capteur optique (60).

11. Procédé de protection selon la revendication 10, comprenant au moins l'une des étapes suivantes :
- la détermination (e3), par un capteur de température (40), d'une température ambiante (TA) dudit dispositif d'affichage tête-haute (1) ;
- la détermination (e4), par un circuit de mesure, d'une température de jonction (TJ) d'un élément semi-conducteur; et
- la détermination (e5), par un capteur de luminosité extérieur, d'une luminosité extérieure (LEX) ;
et comprenant une étape de réduction (e6), par ledit module de protection (30), de l'intensité dudit faisceau lumineux (L) sur la base d'au moins l'un des paramètres suivants : ladite température ambiante (TA), ladite température de jonction (TJ) et ladite luminosité extérieure (LEX).

12. Procédé de protection selon la revendication 10 ou 11, comprenant une étape de déplacement, commandé par ledit module de protection (30) sur la base dudit flux lumineux (FL), d'un second miroir (25) mobile vers une position de protection où le trajet du faisceau lumineux (L) entre le système optique (20) et la lame partiellement transparente (70) est interrompu.

13. Procédé de protection selon l'une des revendications 10 à 12, dans lequel ledit capteur optique (60) détermine un flux lumineux (FL) issu d'un rayonnement dans le domaine visible.

## Patentansprüche

1. Head-up-Anzeigevorrichtung (1) für ein Fahrzeug, umfassend:
- eine Bilderzeugungseinheit (10), die dazu ausgelegt ist, einen Lichtstrahl (L) zu erzeugen;
- ein optisches System (20), das dazu ausgestaltet ist, den Lichtstrahl (L) in Richtung einer teilweise transparenten Scheibe (70) zu projizieren, und einen ersten Spiegel (21) umfasst, der dazu eingerichtet ist, den Lichtstrahl (L) zu reflektieren;
- einen optischen Sensor (60), der dazu ausgelegt ist, einen Lichtstrom (FL) zu bestimmen, wobei ein Sichtfeld (C) des optischen Sensors (60) zu einer Reflexionsfläche des ersten Spiegels (21) hin ausgerichtet ist; und
- ein Schutzmodul (30), das geeignet ist, eine Intensitätsverringerung des Lichtstrahls (L) auf der Grundlage des Lichtstroms (FL) zu steuern; **dadurch gekennzeichnet, dass** der optische Sensor (60) eine Matrix aus mehreren Fotozellen umfasst.

2. Head-up-Anzeigevorrichtung (1) nach Anspruch 1, wobei der optische Sensor (60) mindestens eine Fotozelle umfasst und das Sichtfeld (C) zu dem Mittelpunkt (R) der Reflexionsfläche des Lichtstrahls (L) auf dem ersten Spiegel (21) hin ausgerichtet ist.

3. Head-up-Anzeigevorrichtung (1) nach einem der Ansprüche 1 bis 2, wobei der optische Sensor (60) in der Nähe der Bilderzeugungsvorrichtung (10) angeordnet ist, so dass der Winkel, der zwischen einem Strahlengang des Lichtstrahls (L) zwischen dem Bilderzeugungsvorrichtung (10) und dem ersten Spiegel (21) und einer Hauptbetrachtungsachse (P) des optischen Sensors (60) gebildet wird, kleiner als 45 Grad ist.

4. Head-up-Anzeigevorrichtung (1) nach einem der Ansprüche 1 bis 3, wobei der erste Spiegel (21) ein erstes optisches Filter (22) umfasst, das auf seiner reflektierenden Fläche angeordnet ist und einen Reflexionskoeffizienten von weniger als 5 % bei einer Strahlung aufweist, die in einem gegebenen Bereich des Infrarots enthalten ist.

5. Head-up-Anzeigevorrichtung (1) nach einem der Ansprüche 1 bis 4, wobei der erste Spiegel (21) ein zweites optisches Filter (23) umfasst, das auf seiner reflektierenden Fläche angeordnet ist und einen Reflexionskoeffizienten von weniger als 5 % bei einer gegebenen geradlinigen Polarisation eines Lichtstrahls aufweist.

6. Head-up-Anzeigevorrichtung (1) nach einem der Ansprüche 1 bis 5, wobei der optische Sensor (60) geeignet ist, einen Lichtstrom (FL) zu bestimmen, der aus einer Strahlung im sichtbaren Bereich hervorgeht.

7. Head-up-Anzeigevorrichtung (1) nach einem der Ansprüche 1 bis 6, wobei das optische System (20) einen zweiten Spiegel (25) umfasst, der konkav ist, auf dem der Lichtstrahl (L) reflektiert wird und der zwischen dem ersten Spiegel (21) und der teilweise transparenten Scheibe (70) in Bezug auf den Strahlengang des Lichtstrahls (L) gelegen ist.

8. Head-up-Anzeigevorrichtung (1) nach Anspruch 7, wobei der zweite Spiegel (25) beweglich ist und zu einer Schutzstellung hin verlagert werden kann, in welcher der Strahlengang des Lichtstrahls (L) zwischen dem optischen System (20) und der teilweise transparenten Scheibe (70) unterbrochen ist.

9. Head-up-Anzeigevorrichtung (1) nach einem der Ansprüche 1 bis 8, wobei das Schutzmodul (30) die Intensitätsverringerung ferner auf der Grundlage mindestens eines der folgenden Parameter steuert:
- eine Umgebungstemperatur (TA) der Head-up-Anzeigevorrichtung (1);
- eine Außenhelligkeit (LEX); und
- eine Übergangstemperatur (TJ) eines Halbleiterelements.

10. Verfahren zum Schützen einer Head-up-Anzeigevorrichtung (1), die umfasst:
- eine Bilderzeugungseinheit (10), die dazu ausgelegt ist, einen Lichtstrahl (L) zu erzeugen;
- ein optisches System (20), das dazu ausgestaltet ist, den Lichtstrahl (L) in Richtung einer teilweise transparenten Scheibe (70) zu projizieren, und einen ersten Spiegel (21) umfasst, der dazu eingerichtet ist, den Lichtstrahl (L) zu reflektieren;
- einen optischen Sensor (60), der eine Matrix aus mehreren Fotozellen umfasst und ein Sichtfeld (C) besitzt, das zu der Reflexionsfläche des Lichtstrahls (L) auf dem ersten Spiegel (21) hin ausgerichtet ist; und
- ein Schutzmodul (30);
wobei das Verfahren die folgenden Schritte umfasst:
- das Bestimmen (e1), durch den optischen Sensor (60), eines Lichtstroms (FL); und
- das Verringern (e2), durch das Schutzmodul (30), der Intensität des Lichtstrahls (L) auf der Grundlage des Lichtstroms (FL), der von dem optischen Sensor (60) bestimmt wird.

11. Verfahren zum Schützen nach Anspruch 10, umfassend mindestens einen der folgenden Schritte:
- das Bestimmen (e3), durch einen Temperatursensor (40), einer Umgebungstemperatur (TA) der Head-up-Anzeigevorrichtung (1);
- das Bestimmen (e4), durch eine Messschaltung, einer Übergangstemperatur (TJ) eines Halbleiterelements; und
- das Bestimmen (e5), durch einen Außenhelligkeitssensor, einer Außenhelligkeit (LEX);
und umfassend einen Schritt des Verringerns (e6), durch das Schutzmodul (30), der Intensität des Lichtstrahls (L) auf der Grundlage mindestens eines der folgenden Parameter: die Umgebungstemperatur (TA), die Übergangstemperatur (TJ) und die Außenhelligkeit (LEX).

12. Verfahren zum Schützen nach Anspruch 10 oder 11, umfassend einen Schritt des Verlagerns, gesteuert durch das Schutzmodul (30) auf der Grundlage des Lichtstroms (FL), eines beweglichen zweiten Spiegels (25) zu einer Schutzstellung hin, in welcher der Strahlengang des Lichtstrahls (L) zwischen dem optischen System (20) und der teilweise transparenten Scheibe (70) unterbrochen ist.

13. Verfahren zum Schützen nach einem der Ansprüche 10 bis 12, wobei der optische Sensor (60) einen Lichtstrom (FL) bestimmt, der aus einer Strahlung im sichtbaren Bereich hervorgeht.

## Claims

1. Head-up display device (1) for a vehicle comprising:
- an image generation device (10) designed to generate a light beam (L);
- an optical system (20) configured to project said light beam (L) towards a partially transparent plate (70) and comprising a first mirror (21) arranged to reflect said light beam (L);
- an optical sensor (60) designed to determine a light flux (FL), a field of view (C) of said optical sensor (60) being oriented towards a reflection surface of said first mirror (21); and
- a protective module (30) capable of controlling a reduction in intensity of said light beam (L) on the basis of said light flux (FL); **characterized in that** said optical sensor (60) comprises a matrix of a plurality of photoelectric cells.

2. Head-up display device (1) according to Claim 1, wherein said optical sensor (60) comprises at least one photoelectric cell and said field of view (C) is oriented towards the centre (R) of the reflection surface of said light beam (L) on said first mirror (21).

3. Head-up display device (1) according to any of Claims 1 to 2, wherein said optical sensor (60) is disposed in the vicinity of said image generation device (10) such that the angle formed between a path of said light beam (L) between said image generation device (10) and said first mirror (21) and a main observation axis (P) of said optical sensor (60) is less than 45 degrees.

4. Head-up display device (1) according to any of Claims 1 to 3, wherein said first mirror (21) comprises a first optical filter (22) disposed on its reflecting surface and having a reflection coefficient of less than 5% for radiation within a given infrared range.

5. Head-up display device (1) according to any of Claims 1 to 4, wherein said first mirror (21) comprises a second optical filter (23) disposed on its reflecting surface and having a reflection coefficient of less than 5% for a given linear polarization of a light beam.

6. Head-up display device (1) according to any of Claims 1 to 5, wherein said optical sensor (60) is capable of determining a light flux (FL) from radiation in the visible domain.

7. Head-up display device (1) according to any of Claims 1 to 6, wherein said optical system (20) comprises a second mirror (25), which is concave and on which said light beam (L) reflects and which is located between said first mirror (21) and said partially transparent plate (70) with respect to the path of said light beam (L).

8. Head-up display device (1) according to Claim 7, wherein said second mirror (25) is movable and can be moved to a protective position where the path of the light beam (L) between the optical system (20) and the partially transparent plate (70) is interrupted.

9. Head-up display device (1) according to any of Claims 1 to 8, wherein said protective module (30) also controls said reduction in intensity on the basis of at least one of the following parameters:
- an ambient temperature (TA) of said head-up display device (1);
- an external brightness (LEX); and
- a junction temperature (TJ) of a semiconductor element.

10. Method for protecting a head-up display device (1) comprising:
- an image generation device (10) designed to generate a light beam (L);
- an optical system (20) configured to project said light beam (L) towards a partially transparent plate (70) and comprising a first mirror (21) arranged to reflect said light beam (L);
- an optical sensor (60) comprising a matrix of a plurality of photoelectric cells and having a field of view (C) oriented towards the reflection surface of said light beam (L) on said first mirror (21); and
- a protective module (30);
said method comprising the following steps:
- said optical sensor (60) determining (e1) a light flux (FL); and
- said protective module (30) reducing (e2) the intensity of said light beam (L) on the basis of said light flux (FL) determined by said optical sensor (60).

11. Protection method according to Claim 10, comprising at least one of the following steps:
- a temperature sensor (40) determining (e3) an ambient temperature (TA) of said head-up display device (1);
- a measurement circuit determining (e4) a junction temperature (TJ) of a semiconductor element; and
- an external brightness sensor determining (e5) an external brightness (LEX);
and comprising a step of said protective module (30) reducing (e6) the intensity of said light beam (L) on the basis of at least one of the following parameters: said ambient temperature (TA), said junction temperature (TJ) and said external brightness (LEX).

12. Protection method according to Claim 10 or 11, comprising a step of moving, controlled by said protective module (30) on the basis of said light flux (FL), a second movable mirror (25) to a protection position where the path of the light beam (L) between the optical system (20) and the partially transparent plate (70) is interrupted.

13. Protection method according to any of Claims 10 to 12, wherein said optical sensor (60) determines a light flux (FL) from radiation in the visible domain.
